Europäisches Patentamt

European Patent Office

Office européen des brevets

(11) Publication number : 0 578 437 A1

## (12) EUROPEAN PATENT APPLICATION

(21) Application number : 93305134.4

(22) Date of filing : 30.06.93

(51) Int. Cl.$^5$ : H04B 10/00, H04L 7/02

(30) Priority : 01.07.92 US 907351

(43) Date of publication of application :
12.01.94 Bulletin 94/02

(84) Designated Contracting States :
DE ES GB IT SE

(71) Applicant : AMERICAN TELEPHONE AND
TELEGRAPH COMPANY
32 Avenue of the Americas
New York, NY 10013-2412 (US)

(72) Inventor : Camlet, John V.
RR1 Box 443
Jeffersonville, NY 12748 (US)
Inventor : Pitio, Walter M.
53 Laurie Court, Old Bridge
Matewan, New Jersey 07747 (US)
Inventor : Shugard, Donald D.
27 Devon Road
Middletown, New Jersey 07748 (US)

(74) Representative : Watts, Christopher Malcolm
Kelway, Dr. et al
AT & T (UK) Ltd. 5, Mornington Road
Woodford Green Essex, IG8 0TU (GB)

(54) Arrangement for synchronizing data signals in an optical switched system.

(57) A synchronization arrangement achieves very fast synchronization for a received data signal in an optical switched system. Phase synchronization of received data (201) with an internal clock (216) at the receiver is provided by synchronizing the received data to the internal clock. In the operation of the arrangement, the received data signal from a remote transmitter is reproduced a predetermined number of times and each one of the reproduced data signals is coupled through one of an array of delay lines (203). Each delay line has a different delay and is arranged in an increasing order such that progressively longer or staggered delays for the received data signal is provided in the form of these reproduced, delayed data signals. Each one of the reproduced, delayed data signals is examined for determining the period of time therein during which the incoming data is high and the period of time during which this data is low, in relation to the internal clock signal. With the phase relationship between each delayed data signal and the internal clock determined, the synchronizing arrangement selects the correct one of the delayed data signals which is most closely in phase alignment with the internal clock at the receiver. Once the received data is synchronized, the receiver works completely synchronously without any additional clock adaptation for the period of receipt of the received data.

FIG. 2

## Background of the Invention

### 1. *Technical Field*

This invention is directed to optical switched systems and more particularly to an apparatus and a method for synchronizing data signals in an optical switched system.

### 2. *Description of the Prior Art*

Some of the key problems remaining unsolved and preventing the effective utilization of an optical switched system are how to send bursts of data on optical links, how to switch these bursts of data and how to receive these bursts of data in such a system. These problems are unique when compared to existing optical systems wherein optical links are employed as point to point links. That is, optical links in existing optical systems involve a single transmitter transmitting a data bit stream along a single optical link to a single receiver. Also, in the operation of existing optical systems, the transmitter continuously transmits the data bit stream onto the optical link for receipt by the receiver. Since abrupt changes in either phase or frequency of the data bit stream do not occur, the receiver is permitted to take an appreciable time to synchronize with the incoming bit stream. The receiver may then easily remain synchronized with this data bit stream.

In the prior art, there are several known techniques for synchronizing an incoming data bit stream with a local clock. Those most often employed incorporate phase locked loops and surface acoustic wave (SAW) filters. These synchronization techniques rely on circuitry which adjusts the clock frequency through a feedback mechanism to eventually achieve phase synchronization with the incoming data bit stream. Unfortunately, these techniques require a fairly long amount of time to arrive at phase synchronization, if the phase locked loop or SAW are designed to be stable. If the phase locked loop or SAW filter is designed to be unstable, however, these units may achieve synchronization much faster. But the instability in these components, when designed to be unstable, has the undesirable effect of requiring frequent 1 to 0 and/or 0 to 1 transitions in the incoming data bit stream to maintain synchronization.

Prior art synchronizing arrangements also are available that achieve fast synchronization rates but require extremely tight tolerance on the bit frequency. One such system, available from BROADBAND COMMUNICATION PRODUCTS, is capable of synchronizing to a data bit rate at just over 1 gigahertz in less than 50 nanoseconds; however, the receiver in this system can only function over a frequency range of less than 1 megahertz in width.

Although these synchronizing arrangements are suitable for existing optical systems wherein a continuous data bit stream is provided to a single receiver from a single transmitter, for an optical system employing multiple transmitters and an optical switch for switching packetized data to one of multiple receivers, it is desirable to have a synchronizing arrangement that can achieve synchronization very quickly. Inasmuch as a receiver in such an arrangement has to synchronize on each received data packet, it only needs to be in synchronization with the data for the duration of this received data packet. It is also desirable to have a synchronizing arrangement that can operate over a broad range of received bit frequencies, potentially as much as a two to one range between the highest and the lowest frequency, and still be able to acquire bit synchronization.

## Summary of the Invention

A synchronization arrangement provides very fast synchronization for a data packet received from a remote transmitter. In preferred embodiments, the arrangement provides a method for phase synchronizing the received data packet with an internal clock at the receiver rather than synchronizing the internal clock to the received data packet.

A received data signal from a remote transmitter is reproduced a predetermined number of times and each one of the reproduced data signals is coupled through one of an array of delay lines. Each delay line has a different delay and is arranged in an increasing order such that progressively longer delays for the received data signal is provided in the form of these reproduced data signals.

In accordance with an embodiment of the invention, each one of the reproduced, delayed data signals is examined for determining the period of time therein during which the incoming data is high and the period of time during which this data is low, in relation to the internal clock signal. Thus a very good estimate of the boundary between the bits or the phase relationship of the bits with regard to the internal clock is obtained.

With this phase relationship determined, the synchronizing arrangement selects the correct one of the delayed data signals which is most closely in phase alignment with the internal clock at the receiver. Once the received data is synchronized, the entire receiver works completely synchronously without any additional clock adaptation for the period of receipt of the data packet.

## Brief Description of the Drawing

This invention and its mode of operation will be more clearly understood from the following detailed description when read with the appended drawing in which:

FIG. 1 is a block diagram of an optical communication network comprising a plurality of transmitting and receiving stations and an optical switch;

FIG. 2 is an embodiment of circuitry suitable for use in each receiver associated with the plurality of stations shown in FIG. 1;

FIG. 3 is an alternative embodiment of circuitry suitable for use in each receiver associated with the plurality of stations shown in FIG. 1;

FIG. 4 is an illustration of a repeating packet scheme wherein a serial data bit stream is divided into repeating data packets or frames;

FIG. 5 is an illustration of a repeating packet scheme wherein guard bands are inserted into the data stream for separating the data packets or frames;

FIG. 6 is an illustration of a repeating packet scheme wherein strobe signals are inserted in the data in a random distribution throughout the entire interval that the data is being received;

FIG. 7 is an embodiment of circuitry suitable for use in each transmitter associated with the plurality of stations shown in FIG. 1;

FIG. 8 is an alternative embodiment of circuitry suitable for use in each transmitter associated with the plurality of stations shown in FIG. 1;

FIG. 9 is another alternative embodiment of circuitry suitable for use in each receiver associated with the plurality of stations shown in FIG. 1;

FIG. 10 shows some of the attributes of the input data signal used in each receiver associated with the plurality of stations shown in FIG. 1;

FIG. 11 is an illustration of a wave form analysis where three samples representative of the state of a data pulse are acquired during either a high or a low period of the data pulse;

FIG. 12 is an illustration of a wave form analysis where three samples representative of the state of a data pulse are acquired, one of the pulses being acquired in the region where a data pulse is transitioning from a high period to a low period or from a low period to a high period;

FIG. 13 shows wave forms of both a high level and a low level data pulse and also illustrates the locations in the data stream wherein different type samples are acquired;

FIG. 14 is a bit pattern of a wave form analysis wherein deterministic sample bits and indeterministic sample bits are acquired;

FIG. 15 is a bit pattern of a wave form analysis wherein deterministic sample bits and indeterministic sample bits of a sample bit pattern are overlaid on a waveform for identifying the bit position within the pattern that corresponds to the center of a high or low data pulse in the waveform; and

FIG. 16 is a table illustrating a set of design parameters usable for operation of each receiver associated with the plurality of stations shown in FIG. 1.

## Detailed Description

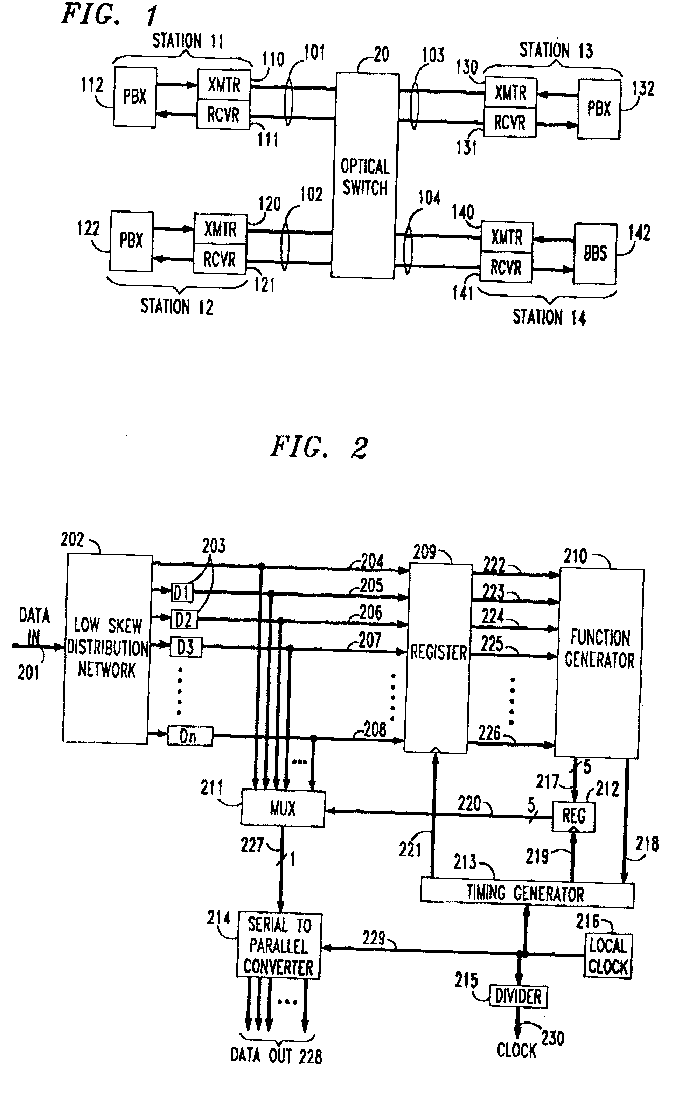

Referring now to FIG. 1 of the drawing, there is shown a general block diagram of a communication network comprising a plurality of stations 11, 12, 13 and 14 and an optical switch 20. Each of these plurality of stations respectively includes a transmitter (XMTR) 110, 120, 130 and 140 and a receiver (RCVR) 111, 121, 131 and 141. Stations 11, 12 and 13 also respectively include a private branch exchange (PBX) 112, 122, and 132 for providing telephone communications. Station 14 is shown as including a broadband switch (BBS) 142 for interfacing communication signals such as broadband video signals into the communication network. Communication traffic from the end points (PBXs and the BBS) within the communication network may be routed through a gateway or optical trunking system for providing access to the public switched network (not shown).

Each of the stations 11, 12, 13 and 14 are respectively connected to the optical switch 20 via optical fiber pairs 101, 102, 103 and 104. The optical switch 20, which serves as a center stage switch, may be co-located in the same building as one of the stations or separately located as shown. Although only four stations are illustratively shown, the limitation on the number of stations would be controlled by the capacity of the optical switch. Therefore additional stations may be added to the communication network as desired.

There is no conversion of optical communication signals to electrical signals in the optical switch 20 for achieving the switching operation. Rather, the optical communication signals entering the optical switch 20 are switched directly from one fiber to another while remaining in the optical domain. This arrangement avoids the speed limitations that would exist if there were bit rate dependent components employed within the optical switch. An optical switch suitable for use as optical switch 20 is disclosed in copending U.S. patent application Serial No. 07/864,293 filed on April 6, 1992.

All communication traffic among the stations 11, 12, 13 and 14 is routed through the optical switch 20. There is one transmit and one receiver fiber in the fiber pairs connecting each one of the stations 11, 12, 13 and 14 to the optical switch 20. The traffic from one station, for example, station 11, may be routed to any of the other stations, for example station 14, by specifically configuring the optical switch 20.

Each of the multiple transmitters 110, 120, 130 and 140 employed in the communication network may, as part of their normal operation, alternately transmit to the same one of the multiple receivers, for example, receiver 141 through the optical switch 20.

So as each packet of data is received by this receiver 141, the data potentially comes from a different one of the transmitters 110, 120 or 130. Thus each packet of data received by receiver 141 may have a different phase orientation from that of its local internal clock. Thus the received data must be synchronized to very quickly, since the synchronization time is overhead that must be added to each packet.

A local clock, described in greater detail later herein, in each receiver 111 through 141 is used to provide all the timing for the receiver circuitry in a station. In the operation of the receiver, the local clock need not be in direct synchronization with a clock used by a transmitter in transmitting a data packet. All that is required is for the clock in the transmitter and the clock in the receiver to be substantially aligned or operating in close frequency synchronization so that for the duration of a packet of data, any drift between the two clocks does not cause bit errors. For example, if drift equal to 10% of the bit period can be tolerated before errors occur, and there are 1000 bits in a packet, then the receiver and transmitter clock frequencies can differ from each other by no more than one part in 10,000. Typically, the required frequency tolerances for the receiver and transmitter clocks easily can be attained for common packet lengths. These tolerances become tighter as the number of bits within a packet increases or as the receiver's ability to tolerate clock drift decreases as is often the case as bit rates increase.

Referring next to FIG. 2, there is shown an embodiment of circuitry suitable for use in each of the plurality of receivers 111 through 141. In each of these receivers, the data is first converted from an optical signal to an electrical signal by an optical to electrical converter (not shown). Optical to electrical signal converters are well known in the art and are not further described herein. The data signal from a remote transmitter is coupled into a low skew distribution network 202 via a data in line 201. This network 202 essentially takes the input data signal and reproduces it a predetermined number of times with a negligible amount of skew between the reproduced signals.

Each one of the reproduced signals is coupled through one of an array of delay lines 203 which delays its associated signal. The delay lines are arranged in order of increasing delays with the shortest delay line being just a wire connection from the low skew distribution network. Each one of the other delay lines has a different delay and is arranged in an increasing order such that each delay line provides a progressively longer delay for its associated signal. Thus the signals appearing on lines 205 through 208 have been progressively delayed or staggered by delay lines D1, D2, D3, with Dn having the longest delay time.

From the delay lines 203, and also directly from the low skew distribution network for the signal on line 204, these staggered data signals appearing on lines 204 through 208 are coupled into a high speed register 209. This high speed register 209 is clocked by a timing signal provided over line 221 from a timing generator 213. A snap-shot-like data pattern indicative of an instantaneous state of the data on lines 204 through 208 is generated on output lines 222 through 226 from the register 209. The combination of each one of these lines provides in the data pattern a captured view of how the incoming data appears spread across a time interval that is equal to the delay in Dn. The low skew distribution network may be substituted with a simple fanout network provided that any inherent signal skews in this network is considered and properly compensated for in the delay for each signal.

The data in the incoming data packet has a data pattern which appears as a mixture of ones and zeros. The most obvious data pattern that results in easy synchronization is simply alternating ones and zeros. If, for example, the array of delays were to accomplish a total delay equal to approximately two bit intervals then when the register 209 is clocked by the timing generator 213, it effectively clocks an image of how the data-in signal on line 201 appears across the duration of the two-bit intervals. By examining the signals respectively appearing on lines 222 through 226, it can be determined during which periods of time, in relation to the clock signal on line 221, the incoming data is high and what period of time the data is low. Thus a very good estimate of the boundary between the bits or the phase orientation of the bits is determinable.

Such a function is determined, in function generator 210 which 1) examines the bits on lines 222 through 226, 2) interpret these bits to determine what the phase relationship of the clock signal on line 221 is with regard to these data bits and 3) generates a select data code for selecting the correct one of the data signals on lines 204 through 208 which is most closely in phase alignment with the local clock 216. The operation of the function generator 210 is described in greater detail later herein, and with reference to FIGs. 10 through 15. The select data code is provided over line 217 to a register 212 where it is latched by a signal from the timing generator 213.

The function generator 210 also provides a synchronization error code to the timing generator 213 when a select data code cannot be generated from the signals available on lines 222 through 226. If the pattern of bits on lines 222 to 226 does not provide sufficient information for the function generator 210 to identify a particular data signal from the staggered data signals that can be used with a high degree of reliability, the function generator provides the error code to the timing generator on line 218 to indicate that a synchronization error has occurred. The function generator may also provide an estimated select code on lines 217 in addition to the error code on line 218, that is based on the history of previous packet synchronizations from the same transmitter.

The select data code from the function generator 210 is provided to a multiplexer (MUX) 211. Before being provided to the multiplexer 211, however, this signal is first latched in a register 212 so that it can control the configuration of the multiplexer 211 for the duration of the incoming data packet. From register 212, the select data code is provided over line 220 to the multiplexer 211. Responsive to the select data code on line 220, the multiplexer 211 selects the correct signal from those appearing on lines 204 to 208 that has the correct phase relationship with the local clock 216.

The data signal selected by multiplexer 211 is provided on line 227 to a serial-to-parallel converter 214 where the serial data is converted to parallel data. A clock signal on line 229 from the local clock 216 provides the required clocking to the serial-to-parallel converter 214 for converting the serial data to parallel data on lines 228. From the serial-to-parallel converter 214, the parallel data on lines 228 is provided to, by way of example, a PBX such as the PBX 112, shown in FIG. 1.

The frequency of the clock signal provided on line 229 to the serial-to-parallel converter 214 is reduced by divider 215 to a frequency that corresponds to the rate at which the parallel data-out is provided on lines 228. This reduced clock frequency is provided by divider 215 on line 230 along with the parallel data on lines 228 to an associated PBX.

The local clock 216 is used to provide all the timing for the receiver circuitry in a station. Thus the timing signals generated by the local clock 216 are used to process the incoming data in the receiver and convert it into a form that is directly sent to, for example, a PBX associated with the station. In the operation of the receiver, the local clock 216 need not be in direct synchronization with a remote clock providing a synchronizing signal for transmitting a data packet. All that is required is for the transmitting clock, which generated the data, and the local receiving clock to be operating in close frequency synchronization so that for the duration of the received data packet, any drift between the two clocks does not cause bit errors. Therefore, standard, commercially available oscillators are usable as the receiver clock 216 and for the transmitter clock, described later herein, which provides the timing for transmission of the data packets.

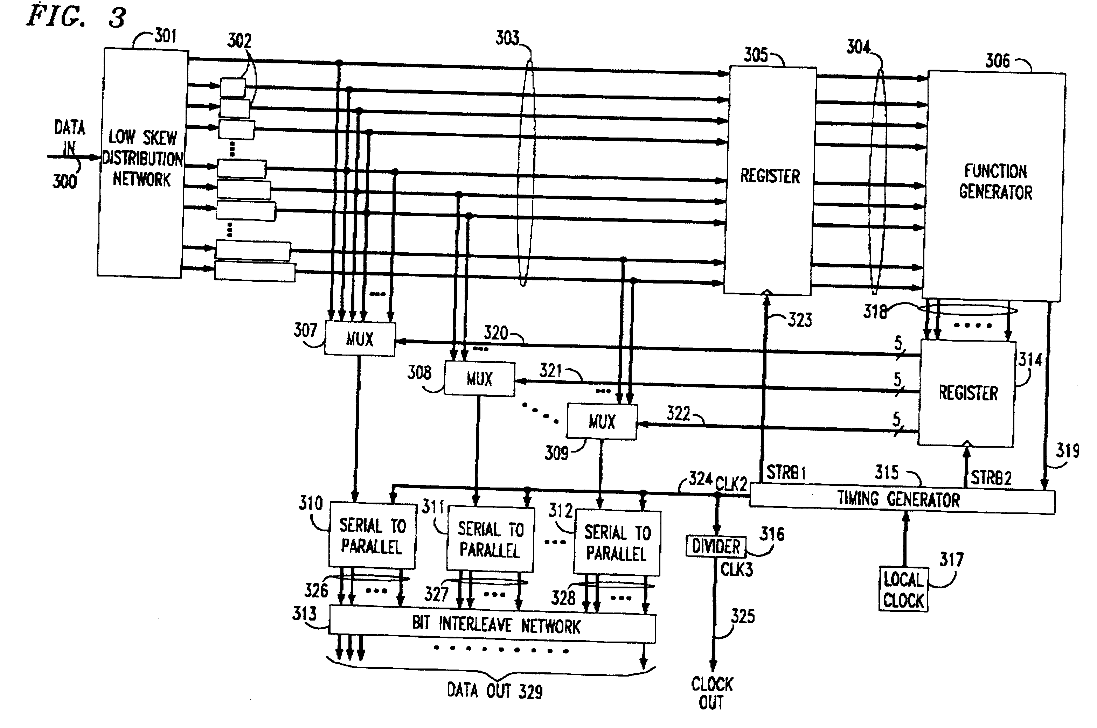

Referring next to FIG. 3, there is shown an alternative embodiment of circuitry suitable for use in each of the plurality of receivers 111 through 141. The circuitry of FIG. 3 is similar to the circuitry of FIG. 2. To the extent its components are similar to the components shown in FIG. 2 and described earlier herein, they are not further described. The circuitry of FIG. 3 differs, however, in that it is arranged such that it contains a sufficient number of delay lines for spanning a larger number of bits of the incoming data signal appearing on data-in line 300.

The data signal from a remote transmitter is coupled into a low skew distribution network 301 via the data-in line 300. This network 301 essentially takes the input data signal and reproduces it a predetermined number of times with a negligible amount of skew between the reproduced signals. Each one of the reproduced signals is coupled through one of a plurality of delay lines 302 which delays its respectively associated signal. The delay lines are arranged in order of increasing delays with the shortest delay line being just a wire connection. Each one of the other delay lines has a different delay and is arranged to provide a progressively longer delay in an increasing ordered amount for its associated signal in the plurality of delay lines 302.

Since the plurality of delay lines 302 are arranged to span multiple bits of the incoming data signal appearing on data-in line 300, the select data codes may be generated in function generator 306 from the bit pattern on lines 304. Multiple multiplexers (MUXs) 307, 308 and 309 are used to simultaneously extract multiple bits of data from the incoming serial data stream on each of the lines 303. A natural clock multiplicative function is achieved thereby. By operating with a single local clock 317, for example, this clock may operate at frequency F while data is being received at frequency 2F when two multiplexers are incorporated into the circuitry. If three multiplexers are incorporated into the circuitry, the clock may operate at frequency F while data is being received at 3F, and so forth.

This operation employing the clock multiplicative function is advantageous for very high speed designs because often these designs are limited by what is technologically feasible in the electronics at the receiving end. By allowing the clock to operate at a significantly slower speed than the data being received, the clock multiplicative effect allows a receiver to be designed in the technology that is capable of only handling frequency F while allowing the data to run at a multiple of frequency F. Once the data is multiplexed in the series of multiplexers 307, 308 and 309, it is provided to a plurality of serial-to-parallel converters 310, 311 and 312 for converting the serial data to parallel data. From each of these converters, the parallel data is coupled to a bit interleave network 313 that combines the parallel data provided by each of the converters 310, 311 and 312 into a single combined parallel data stream on lines 329. This parallel data-out signal on lines 329 reproduces the data contained in the incoming serial data stream, but generates this data at the desirable slower parallel data rate.

The function generator 306, the register 314, the timing generator 315, local clock 317 and divider 316 perform the same functions as those similarly named units shown in FIG. 2 and described earlier herein.

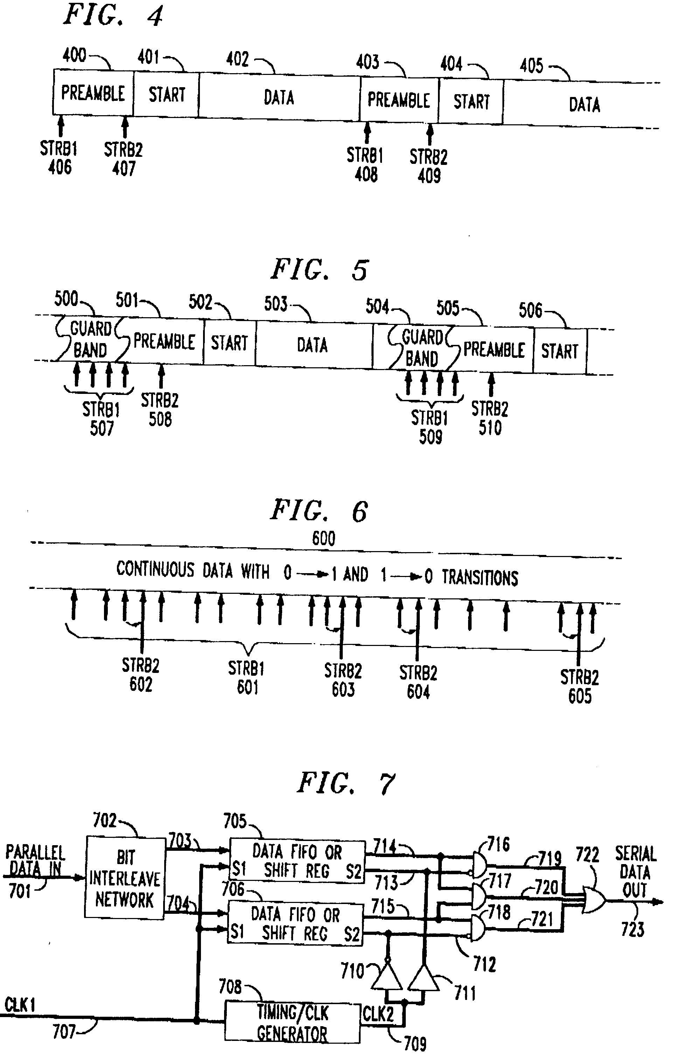

The packetized data may be configured in a number of data transmission schemes for utilizing the circuits of FIGs. 2 and 3 as high speed receivers. These schemes are illustrated in FIGS. 4, 5 and 6. FIG. 4 shows a simple repeating packet scheme. This scheme comprises a serial bit stream that is divided into repeating data packets or frames. Each packet or frame has a preamble 400 followed by a start code 401 and a data section 402. This arrangement is repeated in other packets or frames, e.g., preamble 403, start code 404 and data section 405.

Operation of the receiver circuits of FIGs. 2 and 3 is such that each of these receivers generates timing signals which allow it to synchronize on the incoming data stream for determining the beginnings of the frames. This is basically achieved by clocking, for example, register 305, shown in FIG. 3, with the strobe signal (STRB 1) on line 323 in the middle of the preamble 400. This strobe signal is also illustrated in FIG. 4, as STRB 1. A STRB 2 signal 407 is used to clock the register 314 which latches the select data codes for the multiplexers 307, 308 and 309.

With further reference to FIG. 3 for assisting in explaining the operation of the data transmission scheme shown in FIG. 4, responsive to the STRB 1 signal 406 being applied on line 323, the register 305 provides an image of signals on lines 304. The function generator 306 uses this image to determine which ones of the lines 303 are the correct data input lines for providing select data codes reflective of such lines into the multiplexers 307, 308 and 309. Once this selection is accomplished, the STRB 2 signal 407 is generated synchronizing the receiver with the input data stream and enabling it to locate the start code 401 in the data packet and thereby identify when the beginning of the data section 402 occurs. The data is then received and the whole cycle repeats again with another strobe 408 occurring in the middle of preamble 403.

In operation, the clocks respectively providing timing in the receiver and transmitter only have to be synchronized for the latter portion of the preamble 400 and for the duration of the start code 401 and the data section 402, such that there is not a significant enough skew to cause bit errors once the phase of the data is acquired during the preamble 400. The receiver basically continuously resynchronizes itself for each and every new incoming packet. In order to guard against the loss of data in the data packet, the select data codes provided in the register 305 must be active prior to the beginning of the start code 401.

An alternative scheme for the transmission of a data packet is illustrated in FIG. 5. In this scheme, guard bands are inserted into the data stream and separate the data packets. Since the receivers in an optical switching system are not attached to a point to point optical link, but rather a link that is switched, the guard bands advantageously allow a timing break in the receipt of data packets thereby prohibiting the transmission of data during these switching periods. In such a scheme, switching of the data and the optical switch occurs during the intervals presented by the guard bands 500 and 504.

A single strobe, such as is employed in the scheme illustrated in FIG. 4, also may be employed in the scheme illustrated in FIG. 5 or, alternatively, repetitive strobes 507 may clock a register, for example register 305 in FIG. 3, until a preamble is found. These repetitive strobes are controlled by the function generator 306 wherein it examines the data clocked into the register 305. The generator 306 next determines whether or not the data obtained is an acceptable or unacceptable pattern. The result of the examination is provided in the output signal on line 319 to the timing generator 315, shown in FIG. 3.

The signal on line 319 either causes the timing generator 319 to continue generating STRB 1s or to stop the generation of STRB 1s and then, after allowing the function generator 306 to settle down, generate STRB 2, and correlate and latch the select data code into register 314. The scheme in FIG. 5 conveniently accommodates receipt of data packets received from a different transmitter through an optical switch and allows more jitter in terms of the timing of when each frame or packet arrives. The scheme basically repeats the synchronization cycle by retrying STRB 1 until a good synchronization signal is acquired.

Yet another alternative scheme for the transmission of a data packet is illustrated in FIG. 6. This scheme is somewhat similar to the techniques currently provided in point to point communication links which employ phase locked loops, although this scheme is achieved without using these phase locked loops. This scheme is based on generating STRB 1 signals 601 in a random distribution throughout the entire interval that the data is being received.

When the function generator 306 determines that it has obtained a proper zero-one or one-zero transition between data bits and has determined the phase of the data with respect to the local clock 317, it controls the timing generator to generate the STRB 2 signal 602 to update or adjust the phase synchronization of the receiver to the incoming data. This is done repetitively during the entire receipt of the data. To insure good acquisitions of the data in the incoming data stream, this data stream should contain a distribution of one-zero and zero-one transitions to statistically guarantee that good synchronization cycles will occur prior to accumulation of a significant drift of the data with respect to the local clock.

The interval time between the transitions in the incoming data stream that could result in a new resynchronization must be smaller than the interval of time that the transmitter and receiver are expected to stay in synchronism since the transmitter and receiver have independent clocks. If too much slippage occurs between the receiver and transmitter clocks, however, a compensation circuit may be incorporated into the receiver that is capable of effectively adding or deleting a bit in the incoming bit stream so that the data being output from the receiver remains in synchronism with the local clock. Alternately, small gaps can be transmitted in the data that can be used by the receiver to compensate for the potential data overflows caused by a clock frequency mismatch with the transmitter.

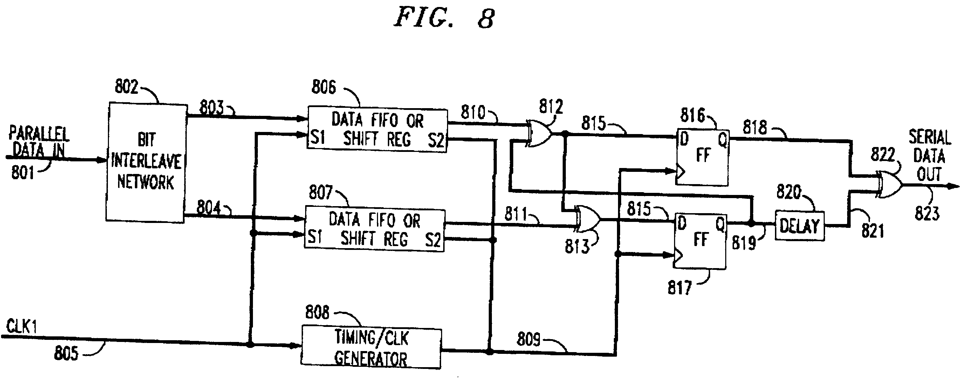

FIGs. 7 and 8 respectively show embodiments of arrangements suitable for use in each one of the plurality of transmitters 110 through 140 for generating the serial data packets. Each of these arrangements show a circuit that, like the circuitry of FIG. 3, accomplishing a clock multiplier function. Thus a station operating in an optical switched system may be provided that both receive and transmit data with clocks that are, in fact, slower than the transmitted and received bit rate.

In the transmitter circuit embodiment of FIG. 7, parallel data is provided from, for example, a PBX over line 701 to a bit interleave network 702. The data from this bit interleave network 702 is provided to a first shift register 705 and a second shift register 706 respectively via lines 703 and 704. An incoming clock CLK 1 signal provides a reference clock signal to a timing and clock generator 708 over line 707. The transmitter circuit uses both phases of the clock signal generated by the timing and clock generator 708. One output CLK 2 of the generator 708 is provided to both an inverter 710 and buffer 711 for generating both phases of the clock on lines 712 and 713. These two phases of the clock signal cause the bit interleaved data stored in the shift registers 705 and 706 to be clocked as serial data out of these registers on lines 714 and 715. The data from the shift registers is transmitted through a network, comprising two-input AND gates 716, 717 and 718 and also three-input OR gate 722, that interleaves those bits out of the transmitter 180 degrees out of phase with each other to generate the serial data stream that is twice the rate of the CLK 1 signal on line 707.

In the transmitter circuit embodiment of FIG. 8, parallel data-in on line 801 is received by a bit interleave network 802 which interleaves the data and then provides this data to shift registers 806 and 807. Responsive to a clock CLK 1 signal on line 805, a timing/clock generator 808 provides a clock signal on line 809 to a network consisting of exclusive OR gates 812, 813 and 822, flip/flops 816 and 817, and a delay line 820. The output of flip/flop 817 provided on line 819 is coupled through the delay line 820. This delay line has a delay equal to one bit interval on the serial data stream or one half of the rate of the clock CLK 1 signal on line 805.

The data from the delay line 820 and the flip/flop 816 is recombined in exclusive OR gate 822. The combination of the exclusive OR gate 813 along with the feedback coming into exclusive OR gate 812 out of the flip/flop 817 sets up a data pattern such that when this data is recombined in exclusive OR gate 822 with the delayed data coming from the delay line 820, the original parallel data-in is reconfigured into a serial data stream obtained on line 823. Since only one of the signals into the exclusive OR gate 822 is changing state as the output data signal at any time, glitches or timing violations are advantageously avoided.

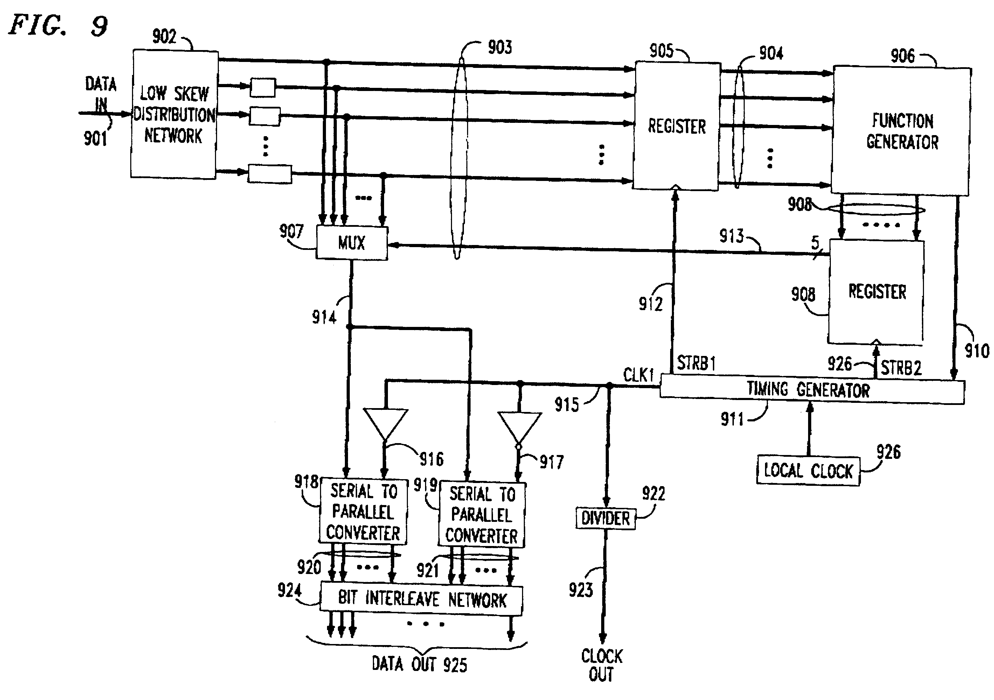

Shown in, FIG. 9 is yet another an alternative embodiment of circuitry suitable for use in each of the plurality of receivers 111 through 141. This receive circuit receives incoming data at twice the frequency of a local clock 926. The receive circuit employs two serial-to-parallel converters 918 and 919 that are clocked 180 degrees out of phase with each other. The clock signals generated through the buffer and inverter respectively on lines 916 and 917 preferably should have a duty cycle as close as possible to fifty percent.

To insure proper operation of the receivers 111 through 141, three parameters are defined. The first is the number of delays for the input data signal such as provided by delay lines 203 and 302 respectively shown in FIGs. 2 and 3. The second is the length of each of the delays and finally, the specific functions performed in a function generator such as function generator 210 in FIG. 2 or function generator 306 in FIG. 3. These three parameters are defined from a consideration of the attributes of an input data signal such as are shown in the serial data waveform 1001 of FIG. 10. These attributes are: 1) the rate of the data signal; 2) the rise time ($RS$) 1002 and fall time ($FL$) 1003 of the data signal; 3) the length of time that a data signal is high ($HT$) 1004; and 4) the length of time that a data signal is low ($LT$) 1005. The sum of the attributes $HT$, $FL$, $LT$, and $RS$ is equal to twice the period of the data at the specified data rate. Also included in the attributes are: 5) the sample period ($SMPL$); and 6) the system jitter ($JIT$). The sample period $SMPL$ is affected by the interval of time surrounding the edge of a local clock signal such as, for example, the clock signal 221 during which a transition on the data leads 204 through 208 may cause register 209 to latch into an indeterminate state such as shown by $SMPL$ 1203 in FIG. 12. The system jitter ($JIT$) is set at double the maximum interval of time that any of the system signals and input data bits may randomly vary in timing from their nominal or average timing.

A function generator, such as generator 210, for example, determines the optimally delayed data signal for selection at the multiplexer 211 from an analysis of the pattern of bits latched in register 209 and appearing on lines 222 through 226. In order to insure that the function generator always deterministically identifies the optimal delayed data signal, the spacing and number of the delays are arranged to insure that the number of samples appearing during either a high or low period in the input data stream that are deterministically latched in register 209 outnumber the number of samples that are latched indeterministically in register 209. The design goal in choosing the number of delay taps and their spacing is to select the number of possible deterministic samples $N$ versus the number of possible indeterministic samples $M$ so that as shown in equation EQ 1

EQ 1: $N > M$.

Thus the number of possible deterministic samples $N$ is always greater than the number of possible indeterministic samples $M$.

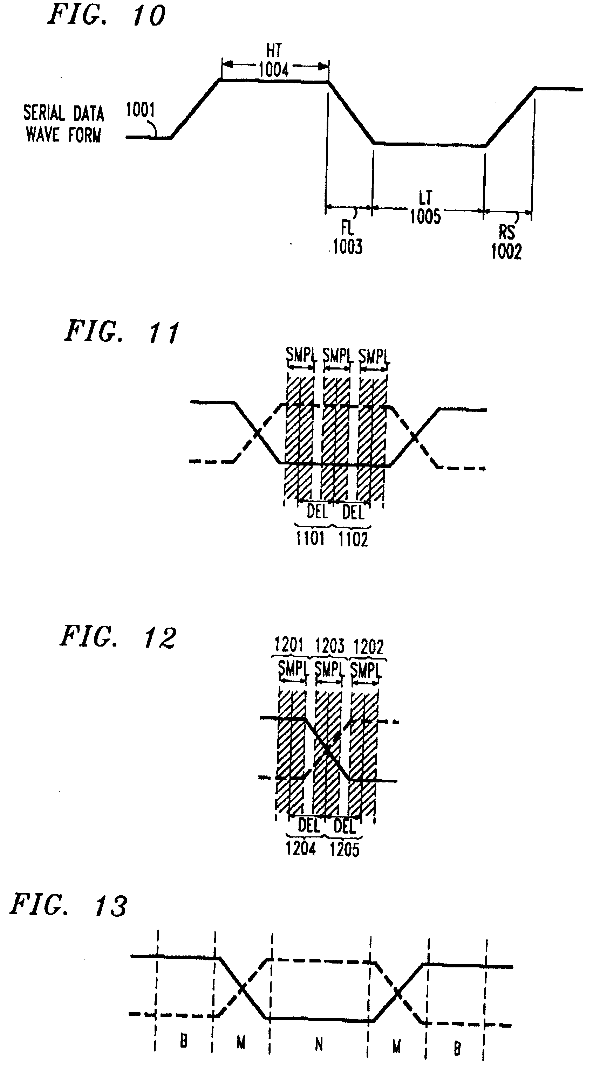

In order to determine a delay spacing interval (DEL), shown in FIG. 11 as 1101 and 1102 and in FIG. 12 as 1204 and 1205, required for a specific data rate, an analysis which considers the above attributes of the input data signal is performed and equations which define the range of values that DEL may have are generated. The first of these equations

EQ 2: $MIN\,(HT,LT) > (N - 1)(DEL) + SMPL + DEL + JIT$

determines the upper bound on DEL and is illustrated by the example analysis shown in FIG. 11 where three deterministic samples are acquired during a high or low period of a data pulse. The inequality in equation EQ 2 shows that in order for $N$ deterministic samples to always exist during a data pulse, the period of time for the samples $(N\text{-}1)$ times DEL plus SMPL plus an additional period DEL plus JIT has to be less than the minimum (MIN) of the high or low period of the data pulse. The additional DEL period and JIT are required to accommodate any arbitrary timing placement of the $N$ samples within a data pulse and any system clock and data jitter that may occur.

EQ 3: $DEL < \dfrac{MIN(HT,LT) - SMPL - JIT}{N}$

shows the resulting inequality that determines the upper bound of DEL.

EQ 4: $MAX(RS,FL) < M(DEL) - SMPL - JIT$ determines the lower bound of DEL. This is also shown in FIG. 12 which illustrates an example analysis for insuring that the number of indeterministic samples $M$ does not exceed two. The worst case timing that must be avoided is one where any three consecutive samples occur in the region where data pulses are transitioning either from high to low or low to high. To prevent any three consecutive samples from being indeterministic either the left sample period SMPL 1201 or the right sample period SMPL 1202 in FIG. 12 must avoid the rise or fall period of the data pulse. In order for this to occur, $M$ times DEL minus SMPL minus JIT must be greater than the maximum MAX of the rise time RS or the fall time FL of the data signal.

The resulting inequality that determines the lower bound of DEL is shown in EQ 5.

EQ 5: $DEL > \dfrac{MAX(RS,FL) + SMPL + JIT}{M}$

To determine the total number of delayed samples required, the following analysis illustrated with reference to the waveform shown in FIG. 13 must be performed. The total number of samples must span 1) a full high or low period of a data pulse, 2) the rise and fall times on both sides of the data pulse, and 3) a number of possible samples $B$ of the surrounding data pulses. This is desirable since even if the data pattern consists of alternating ones and zeros, all the samples acquired during the rise and fall times of the data pulse may be either all zeros or all ones, since they are indeterministic. But by insuring that the state of the surrounding data pulses is sampled, the position of the data pulse may be accurately determined. As shown in equation EQ 6,

EQ 6: $N \geqq B \geqq 1$.

Equation EQ 6 thus provides that the number of possible samples $B$ of the surrounding data must be less than or equal to the number of possible good samples $N$ in a data pulse and greater than or equal to one. In equation EQ 7,

EQ 7: $TOTAL\ SAMPLES \geqq N + 2M + 2B$.

Equation EQ 7 thus provides that the total number of samples be greater than or equal to the number of possible determinate samples $N$ acquired during a high or low pulse, plus two times the number of possible indeterminate samples $M$ acquired during the rise and fall times, plus two times the number of possible samples $B$ acquired in the surrounding data pulses.

To use these above equations for determining the control generator function, an analysis is required on all the possible snapshot sample patterns that a function generator, for example, function generator 210 can receive on lines 222 through 226. All possible patterns can be generated based on the following equations, EQ 8, EQ 9 and EQ 10.

EQ 8: $0 \leqq X \leqq M$

provides for the number of actual indeterminate samples XNUM to be greater than or equal to zero and less than or equal to the number of possible indeterminate samples $M$,

EQ 9: $SNUM \geqq N$

provides for the number of actual determinate samples SNUM to be greater than or equal to the number of possible determinate samples $N$, and

EQ 10: $(SNUM + XNUM)DEL \geqq (DATA\ BIT\ PERIOD)$

provides that the number of samples (actual determinate samples plus actual indeterminate samples) times DEL should be greater than or equal to the data bit period.

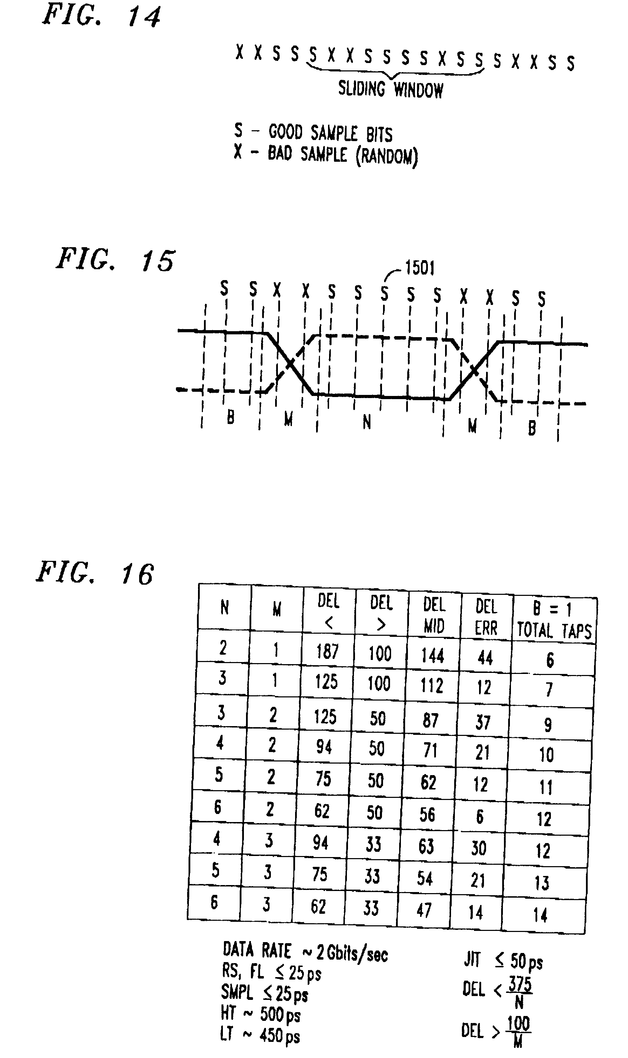

Using these equations, it is possible to generate all of the resulting bit patterns such as the pattern illustratively shown in FIG. 14. A stream of bits is generated consisting of actual deterministic sample bits S that number SNUM, and actual indeterministic sample bits X that number XNUM. In arriving at the optimally delayed data signal for synchronizing with the local clock, all patterns resulting from all possible values of SNUM and XNUM must be generated. The actual patterns that a function generator, such as function generator 210 sees, are generated by sliding a window equal in size to the total number of samples across the streams of bit patterns. For each of these windowed patterns the desired output function, which is the number of the bit within the pattern that corresponds to the center of either a high or low data pulse, has to be determined. FIG. 15 provides an illustration of a sample bit pattern overlaid on a waveform and identifying the bit position 1501 within the pattern that corresponds to the center of the high or low data pulse in the waveform.

The function performed by function generator 210 and function generator 306 advantageously may be implemented in a random access memory (RAM) or read only memory (ROM) lookup table where the sampled pattern of bits from register 209 generates an address into the table. The contents of the table are the bit positions of the centers of either the high or low pulses corresponding to each sample pattern. Once identified, this encoded center bit position is output on lines 217, latched in register 212 and controls multiplexer 211 for the duration of the reception of the data packet. The criteria for determining the center bit of a data pulse also must include all timing and delay considerations for the multiplexer 211, timing generator 213, and serial to parallel converter 214.

The contents of a RAM lookup table serving as function generator 210 may be programmed by a computer or controller located in, for example, each PBX for its initialization processing based on the expected input data characteristics. Such a computer, with the proper programming, executes a process which identifies all possible bit pattern streams based on the equations, then slides a window across each of these for identifying all possible sample patterns and finally, generates their corresponding bit select functions. A program in the controller, consisting of multiple nested loops, causes each one of the nested loops to generate all possibilities of SNUM, XNUM, and window position. An equivalent ROM lookup table also may be generated by a computer prior to the assembly of a system.

Shown in the table of FIG. 16 is a set of design parameters usable for operation of a receiver. For illustration purposes, a receiver may use a data rate of two gigabits per second, RS and FL are twenty-five picoseconds, SMPL is twenty-five picoseconds, HT is five hundred picoseconds, LT is four hundred and fifty picoseconds, and JIT is fifty picoseconds. Using equation EQ 3, DEL may be calculated to be less than three hundred and seventy-five divided by N. And using equation EQ 5, DEL must be greater than one hundred divided by M. By selecting values of N and M, therefore, the range for DEL can be calculated as well as the number of taps or samples. From the range of DEL, a nominal value for DEL, and a tolerable error for DEL also may be calculated. The table also shows the total number of samples for each N and M combination assuming a B of 1.

Through use of the table in FIG. 16, engineering tradeoffs may be determined. For example, for small values of N it is better if N is odd. Also, the tolerable DEL error should be kept as large as possible and the number of taps minimized.

**Claims**

1. A data synchronizing arrangement comprising:
   clock signal means (216); CHARACTERIZED BY
   means (202, 203, 209) for generating a plurality of progressively delayed data signals representative of an input data signal; and
   means (210-214) for selecting from the plurality of progressively delayed data signals a delayed data signal that is substantially in phase alignment with the clock signal.

2. The data synchronizing arrangement of claim 1 wherein the means for generating the plurality of progressively delayed data signals includes means (202) for reproducing the received data signal a predetermined number of times and means (203) for delaying each one of the reproduced data signals in an increasing ordered amount.

3. The data synchronizing arrangement of claim 2 wherein the selecting means includes means (210) for examining each one of the reproduced data signals for determining the phase relationship of each reproduced data signal to the clock signal and means (212) for generating a select data signal indicative of the correct one of the reproduced data signals that is substantially in phase alignment with the clock signal.

4. The data synchronizing arrangement of claim 3 wherein the examining means further includes means (204) for sampling each one of the reproduced data signals for determining when the data in each signal is in a high state, a low state or a transition state.

5. The data synchronizing arrangement of claim 4 wherein the sampling means generates a pattern reflective of an instantaneous state of the data in each one of the reproduced signals.

6. The data synchronizing arrangement of claim 5 wherein the examining means examines the pattern generated by the sampling means for determining the phase relationship of each reproduced data signal to the clock signal.

7. The data synchronizing arrangement of claim 3 wherein the select data signal provides means for selecting in a multiplier (210) the reproduced data signal that is substantially in phase alignment with the clock signal.

8. The data synchronizing arrangement of claim 8 wherein the clock signal generating means comprises a local clock, the local clock providing the clock signal for phase synchronizing the received data signal to said clock signal.

9. A method of synchronizing a received data signal with a clock signal, CHARACTERIZED BY:
    generating a plurality of progressively delayed data signals representative of the received data signal; and
    selecting from the plurality of progressively delayed data signals a delayed data signal that is substantially in phase alignment with the clock signal.

10. The method of synchronizing a received data signal as in claim 10 wherein the generating step further includes the steps of reproducing the received data signal a predetermined number of times and delaying each one of the reproduced data signals in an increasing ordered amount for providing the plurality of progressively delayed data signals.

11. The method of synchronizing a received data signal as in claim 11 wherein the selecting step includes the steps of examining each one of the reproduced data signals for determining the phase relationship of each reproduced data signal to the clock signal and generating a select data signal indicative of the correct one of the reproduced data signals that is substantially in phase alignment with the clock signal.

12. The method of synchronizing a received data signal as in claim 12 wherein the examining step further includes the step of sampling each one of the reproduced data signals for determining when the data in each signal is in a high state, a low state or a transition state.

13. The method of synchronizing a received data signal as in claim 13 wherein the sampling step includes the step of generating a pattern reflective of an instantaneous state of the data in each one of the reproduced signals.

14. The method of synchronizing a received data signal as in claim 14 wherein the sampling step further includes the step of examining the generated pattern for determining the correct one of the reproduced data signals that is substantially in phase alignment with the clock signal.

15. The method of synchronizing a received data signal as in claim 12 wherein the select data signal selects in a multiplier the reproduced data signal that is substantially in phase alignment with the clock signal.

*FIG. 1*

*FIG. 2*

FIG. 3

EP 0 578 437 A1

## *FIG. 4*

| PREAMBLE | START | DATA | PREAMBLE | START | DATA |
|----------|-------|------|----------|-------|------|

400 — 401 — 402 — 403 — 404 — 405 —

STRB1 406    STRB2 407    STRB1 408    STRB2 409

## *FIG. 5*

| GUARD BAND | PREAMBLE | START | DATA | GUARD BAND | PREAMBLE | START |
|------------|----------|-------|------|------------|----------|-------|

500 — 501 — 502 — 503 — 504 — 505 — 506 —

STRB1 507    STRB2 508    STRB1 509    STRB2 510

## *FIG. 6*

600

CONTINUOUS DATA WITH 0 → 1 AND 1 → 0 TRANSITIONS

STRB2 602    STRB1 601    STRB2 603    STRB2 604    STRB2 605

## *FIG. 7*

PARALLEL DATA IN 701 → BIT INTERLEAVE NETWORK 702

703 / 704 → DATA FIFO OR SHIFT REG (S1 ... S2) 705, 706

714, 713, 715 → 716, 717, 718 712 → 719, 720, 721 → 722 → SERIAL DATA OUT 723

CLK1 707

TIMING/CLK GENERATOR 708   CLK2 709

710   711

FIG. 8

EP 0 578 437 A1

FIG. 9

DATA IN 901 → LOW SKEW DISTRIBUTION NETWORK 902

903

REGISTER 905

904

FUNCTION GENERATOR 906

MUX 907

913

912

REGISTER 908 5 908

914

910

STRB1 CLK1 926 STRB2

TIMING GENERATOR 911

915

916 917

LOCAL CLOCK 926

SERIAL TO PARALLEL CONVERTER 918 919 SERIAL TO PARALLEL CONVERTER

DIVIDER 922

920 921

923

BIT INTERLEAVE NETWORK 924

DATA OUT 925

CLOCK OUT

EP 0 578 437 A1

15

*FIG. 10*

SERIAL DATA WAVE FORM 1001

HT 1004

LT 1005

FL 1003

RS 1002

*FIG. 11*

SMPL SMPL SMPL

DEL DEL
1101 1102

*FIG. 12*

1201 1203 1202

SMPL SMPL SMPL

DEL DEL
1204 1205

*FIG. 13*

B N N M B

16

*FIG. 14*

X X S S S̲ X X S S S S X S S̲ S X X S S

SLIDING WINDOW

S – GOOD SAMPLE BITS
X – BAD SAMPLE (RANDOM)

*FIG. 15*

*FIG. 16*

| N | M | DEL < | DEL > | DEL MID | DEL ERR | B = 1 TOTAL TAPS |
|---|---|---|---|---|---|---|
| 2 | 1 | 187 | 100 | 144 | 44 | 6 |
| 3 | 1 | 125 | 100 | 112 | 12 | 7 |
| 3 | 2 | 125 | 50 | 87 | 37 | 9 |
| 4 | 2 | 94 | 50 | 71 | 21 | 10 |
| 5 | 2 | 75 | 50 | 62 | 12 | 11 |
| 6 | 2 | 62 | 50 | 56 | 6 | 12 |
| 4 | 3 | 94 | 33 | 63 | 30 | 12 |
| 5 | 3 | 75 | 33 | 54 | 21 | 13 |
| 6 | 3 | 62 | 33 | 47 | 14 | 14 |

DATA RATE ~ 2 Gbits/sec
RS, FL ≤ 25 ps
SMPL ≤ 25 ps
HT ~ 500 ps
LT ~ 450 ps

JIT ≤ 50 ps

$DEL < \frac{375}{N}$

$DEL > \frac{100}{M}$

**European Patent Office**

# EUROPEAN SEARCH REPORT

Application Number

| DOCUMENTS CONSIDERED TO BE RELEVANT | | | EP 93305134.4 |
|---|---|---|---|

| Category | Citation of document with indication, where appropriate, of relevant passages | Relevant to claim | CLASSIFICATION OF THE APPLICATION (Int. Cl. 5) |
|---|---|---|---|
| X | GB - A - 2 171 577 (BOLT BERANEK) * Fig. 1; claims 1,3; page 1, column 59-70 * | 1,8,9, 15 | H 04 B 10/00 H 04 L 7/02 |
| A | EP - A - 0 436 958 (HITACHI) * Abstract; fig. 5; claims 6,9 * | 1,3,8, 9 | |
| A | US - A - 4 928 290 (VO) * Abstract; claim 1 * | 1,3,8, 9 | |
| | | | TECHNICAL FIELDS SEARCHED (Int. Cl.5) H 04 B H 04 L |

The present search report has been drawn up for all claims

| Place of search | Date of completion of the search | Examiner |
|---|---|---|
| VIENNA | 22-10-1993 | FUSSY |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)